# EUROPEAN PATENT SPECIFICATION

(11) **EP 2 347 228 B1**
(45) Date of publication and mention of the grant of the patent: **27.03.2013**
(21) Application number: 09751776.7
(22) Date of filing: 14.10.2009
(51) Int. Cl.: G01H 1/00, G01M 13/04

(54) **Data collector**
Datensammler
Collectionneur de données

(30) Priority: 14.10.2008 US 196058 P
(43) Date of publication of application: 27.07.2011
(73) Proprietor: Aktiebolaget SKF, 415 50 Göteborg (SE)
(72) Inventor: MCGOOGAN, Gerard, Philpston (GB)
(74) Representative: Burö, Sven Peter
(86) International application number: PCT/EP2009/007374
(87) International publication number: WO 2010/043387

(56) References cited:
- EP-A2- 1 258 713
- GB-A- 2 446 035

## Description

### TECHNICAL FIELD

This invention relates to data collectors/analysers, particularly for in-situ analysis and/or diagnosis of the condition of bearings. More particularly, the present invention relates to off-line vibrational analysers which comprise digital signal processing.

### BACKGROUND

Vibrations measured by bearing testers or analysers, for example while a machine is in operation and/or when a machine is subjected to a controlled external excitation, provide an indication of bearing conditions and/or lubrication conditions and/or other mechanical conditions. This may be used to detect abnormalities, plan preventive maintenance and avoid bearing failure. Some vibrational analysis systems comprise a network of sensors which are permanently installed on a plurality of machines and which provide data to a central processor on a continuous or periodic basis. On the other hand, the vibrational analysers of the present invention are off-line analysers, that is to say they are devices which a maintenance engineer will take sequentially to each machine which he wishes to analyse. Such off-line analysers are generally hand-held and generally incorporate or are connectable to one or more sensors, have processing means for analysing the signal from the sensor and a display. They often permit the collection/recording of data for subsequent downloading to a separate computer system. They are also sometimes called portable data collectors. EP 1 258 713 discloses a portable vibration monitor comprising a housing, a probe, a transducer, an analog to digital converter, a processing circuit and an interface circuit. The interface circuit is configured to receive digital data from the processing circuit and to transmit the digital data to a device external to the housing.

The inventors have perceived that off-line data collectors/analysers and in particular vibration bearing analysers with configurations in which demodulation and/or filtering of a signal derived from an analogue sensor are performed, may be improved and/or provided with improved functionality.

### SUMMARY OF THE INVENTION

According to one of its aspects, the present invention provides an off-line signal analyser comprising an analogue to digital converter (ADC). The ADC converts analogue input signals to digital signals. The analogue input signals comprise a phase. The analyser further comprises a digital signal processor (DSP) configured to perform digital processing on the digital signals from the ADC. The analyser further comprises an external output derived from the DSP and configured to provide a real-time output signal. According to the invention the real time output signal is synchronized with the ADC at least with respect to the signal phase.

In some embodiments the external output is a functional part of the DSP and the ADC and the DSP have a common control clock. In some of these embodiments one of the ADC or the DSP is a control clock master and the other is a control clock slave.

According to another one of its aspects, the present invention provides an off-line vibrational analyser comprising a digital signal processor configured to perform digital processing on a signal comprising e.g. bearing vibrational data derived from a sensor input, wherein the analyser comprises an external output configured to provide a real time output derived from the digital signal processor to at least one peripheral device.

The output is a real time output, that is to say an output which is configured to be contemporaneous with the input to the vibrational analyser (for example from a sensor) as opposed, for example, to an output which is stored by the vibrational analyser for subsequent downloading when data collection has been completed. There may be a time delay between the input to the vibrational analyser and the real time output; this may be up to a few seconds, for example up to 2 or 3 seconds.

The output is an external output, that is to say an output configured to provide a signal to an external or peripheral device. The term "peripheral device" is intended to denote a device that may be connected to the vibrational analyser but which is distinct from the components which are integral with the vibrational analyser. The components which are integral with the vibrational analyser include, for example, integral sensors, integral displays (for example an integral screen), integral data processors and integral data storage devices (for example a memory or memory card which may be removable).

It will be appreciated that a vibrational analyser according to the present invention may be used to analyse the condition of components such as gears, in addition to rolling element bearings.

### BRIEF DESCRIPTION OF THE DRAWINGS

Embodiments of the invention will now be described, by way of example only, with reference to the accompanying drawings of which:
- Figs 1 a-1 b: are block diagrams illustrating components which may be included in and possible configurations for a vibrational analyser,
- Fig 2: illustrates a block diagram of an analyser comprising digital filtering and demodulation,
- Figs 3-9: illustrate block diagrams of particular embodiments of the present invention.

### DETAILED DESCRIPTION

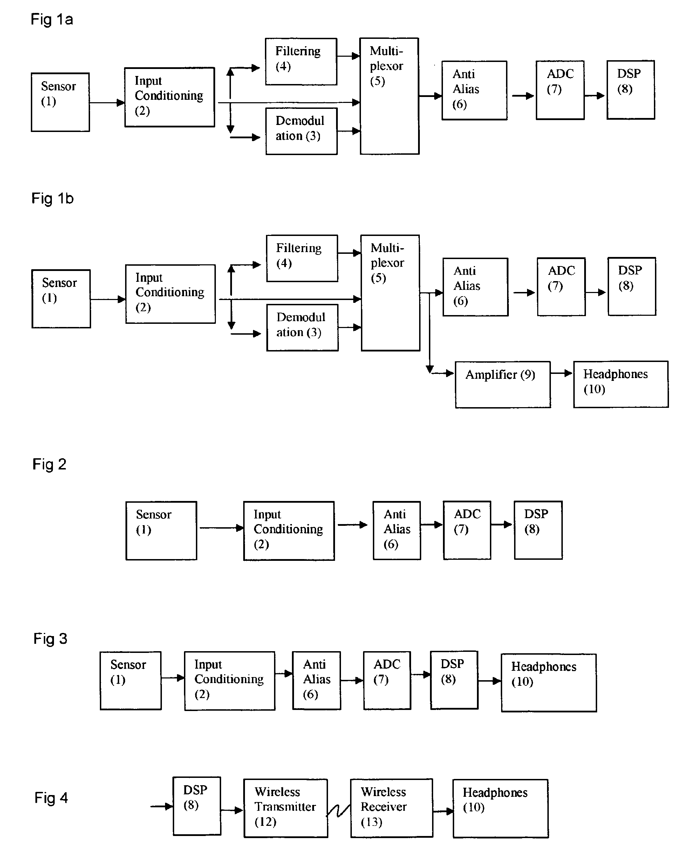

Off-line vibrational analysers in accordance with the invention may comprise components illustrated with reference to Fig 1 a and Fig 1 b. These figures illustrate possible configurations of off-line analysers for analysing e.g. bearing vibrational data, which combine some or all of the following features:
(1) A sensor 1, for example an accelerometer, that measures a parameter that relates to the condition of the machine that is being examined.
(2) Input conditioning 2; providing sensor power and gain if required.
(3) Demodulation 3, typically some form of band limiting filters followed by demodulation (examples are enveloping, GSe). This may also include demodulating signals that are ultrasonic (SEE or Acoustic emissions).
(4) Filtering 4 to remove spurious out of band signals or time domain integration.
(5) A multiplexor 5 to select straight, filtered or demodulated paths.
(6) Anti-alias filter 6 for removal of out of band signals.
(7) An analogue to digital converter (ADC) 7 to convert analogue signal into digital representation.
(8) A digital signal processor (DSP) 8 to perform digital processing, for example FFT.

In addition to the above mentioned features, analysers will traditionally comprise some kind of user input, such as keys and switches to make selections, and also output(s), such as displays and lights/indicators to give feedback and results to a user. These features are not illustrated.

In off-line vibrational analysers which use digital signal processing 8, an analogue signal derived from a sensor 1 is converted to a digital signal for treatment by the digital signal processor 8. In configurations similar to that of Fig 1a, filtering 4 and/or demodulation 3 of a signal from the sensor 1 is performed on the analogue signal prior to its conversion to a digital signal. Signal processing is performed at least partly in the analogue domain.

It is often useful and helpful for maintenance engineers to listen to machines being analysed so as to perceive vibrational characteristics. The previous practice of using a screwdriver pressed against the machine and held to the ear of the user to listen to a running machine is now rarely used due, notably, to health and safety considerations (the proximity of the user's head to rotating machinery and/or the use of ear defenders). In addition, the quality and information that can be detected with such a method is less than optimal.

Fig 1b shows a configuration which may be used to provide a listening function to a configuration similar to that illustrated in Fig 1 a using:
(9) Amplifier 9 to boost output from the analogue signal path to levels required to drive a headphone.
(10) Headphones 10 for a user to listen into the analogue signal.

Such a support for connecting a headphone 10 is a beneficial feature. In the Fig 1 b set-up the user may for example be able to select whether to listen to a raw, unfiltered signal, a filtered signal or to the demodulated signal depending on the condition of the machine and personal preference. What is listened to is a live signal and the user can correlate this to the processed signal on the display. This is a radical improvement to using a screwdriver. The headphones 10 might be integrated into hearing protectors. In an attempt to reduce costs in such vibrational analysers, traditionally only one channel may be made available and/or not all filter paths may be accessible and/or the headphones may for example have a fixed gain.

There is an attempt to move more and more into the digital domain. Fig 2 shows an example of a configuration similar to that of Fig 1a, but with the difference that demodulation and/or filtering functions are performed in the digital domain. This may increase linearity and/or reduce costs. It also allows a greater flexibility as software controlled functionality can be tuned/improved, added and/or deleted without changing any hardware.

Considering a configuration similar to that of Fig 2, unlike that of the Fig 1a configuration, it is no longer possible to tap off a demodulated and/or filtered signal and feed this to an amplifier 9 and subsequently to headphones 10. As it is important to keep the same phase of the input signal to both headphones and further digital processing, attempts could be made to add a headphone feature to such units by adding analogue filters before a headphone amplifier, similar to the analogue section of Fig 1 b. However, this would be costly and unwieldy and could lead to confusion if the headphones are listening to a different signal than is being collected/displayed by the unit. A further problem is that, just as in the case with listening with a screwdriver, it is not desirable to have loose wires close to, for example, rotating machinery.

According to the invention these problems are solved by having information/data provided by a real-time interface/output directly or indirectly connected to a DSP. As can be seen in a first embodiment of the invention in Fig 3, a headphone function is created by feeding the digital processed signal from the DSP (digital signal processor) 8 via a digital interface, for example a USB or RS232 interface, to the headphones 10. This may allow the use of, for example, a USB headset without requiring a digital to analogue converter (DAC) or amplifier in the analyser/portable data collector itself.

In the embodiment of Fig 3 (and in the further illustrated embodiments of Figs 4 to 8), a real time output derived from the digital signal processor 8 of an off-line analyser is provided to at least one peripheral device, e.g. headphones. According to the invention the phase of the signal fed to the headphones is synchronized to that being received and processed by the DSP 8. This is made possible by synchronizing the information/data that is being transferred by the real-time interface with that of the ADC(s) 7. The DSP may be provided with additional firmware to output the desired signal or stream of data. The digital data stream may represent one of the following:
1) The raw signal.
2) A filtered signal. The shape and order of the filter are no longer constrained by the hardware present.
3) A filtered and demodulated signal. If required more than one implementation of demodulation can be included.

On multiple channel analysers, any channel may be easily selected. The signal may be attenuated and/or amplified in the digital domain. Different signals may be fed to the left and right ears of headphones. Ultrasonic and/or subsonic signals may be shifted into the audio range. The frequency response of the output digital stream may be customised to an individual; for example, to compensate for hearing loss (not uncommon in maintenance engineers). Non measurement related audio, for example pre-recorded signals, may be provided.

As the DSP can generate multiple data streams concurrently, the invention may provide for the user to switch between multiple data streams; this may be achieved without having to wait on filter settling time.

The external output of the vibrational analyser may comprise a wireless transmitter configured to transmit the real time output signal to a peripheral device, for example to feed this signal to headphones or another listening device via a wireless link. This could involve:
1) Sending it to wireless headphones
2) Sending the signal to another person for their opinion.

An embodiment showing this is illustrated in Fig 4 and comprises
(12) A wireless transmitter 12
(13) A wireless receiver 13 (which may be part of a peripheral device such as wireless headphones)

Wireless transmission can be one directional with the use of a transmitter and a receiver or bi-directional with the use of a transceiver at each end. In the embodiment of Fig 4, a real time output of the DSP is fed directly into the wireless module ie as a digital signal. An industry standard wireless interface, for example Bluetooth, or a proprietary interface may be used.

Any device to which the output is connected may be detectable, for example by the device providing an identification signal. This may provide information feedback to identify what peripheral device(s) is or are connected (headset, printer etc), and may be used to determine the nature of the output; for example, to distinguish if audio, strobe trigger or a sweep signal should be provided as the output. Some systems, particularly wireless systems, work on profiles. That is, a new device broadcasts what profiles it supports, for example audio, serial, etc. Thus a vibrational analyser in accordance with the invention may be configured to determine the appropriate type of output to be directed to a particular peripheral device.

The analyser may have at least one external output provided with a signal derived from the digital signal processor. Preferably, it has one or at least one output which is a multifunctional output, i.e. which is an output adapted to be connected to more than one type of device. It is thus possible to have a plurality of peripheral devices, for example headphones and a strobe, connected to the same output (which may be a transmitter), for example by the use of multi drop Bluetooth.

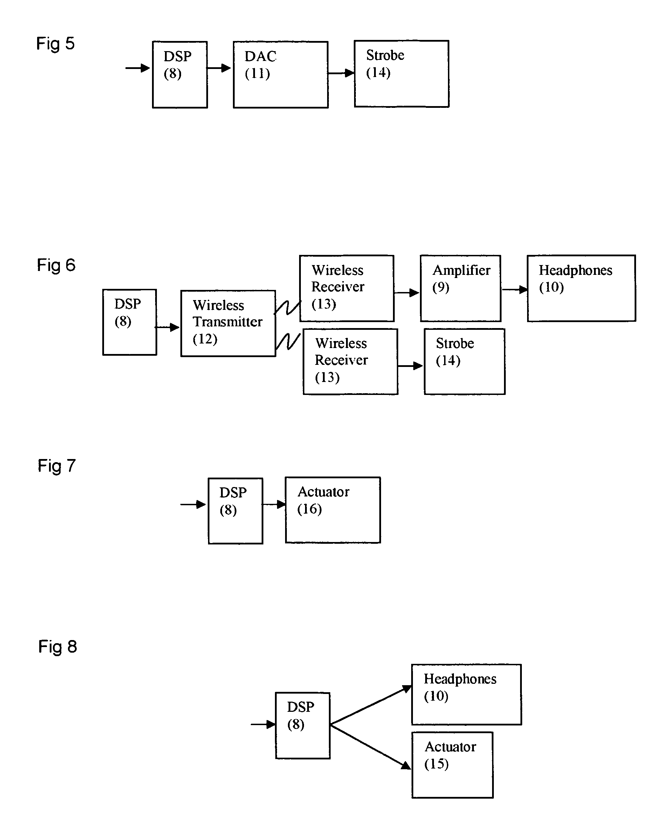

Fig 5 illustrates an embodiment in which an analogue output is desired, for example when an analogue strobe 14 is to be used. The real time output would then comprise a digital to analogue converter (DAC) 11 (which may be a headphone output) which is then coupled to the strobe 14. This may be configured:
1) To trigger a strobe based on the input analogue signal, for example one time.
2) To trigger a strobe based on a user input.
3) To vary the phase so as to "freeze" a rotating part of a machine at different rotational angles.
4) To trigger a high speed camera to take photographs of the machine for future analysis.

Fig 6 illustrates an embodiment in which the real-time output is connected to a wireless transmitter 12, which in turn is wirelessly linked with two wireless receivers 13. One receiver being coupled to an amplifier 9 and subsequently headphones 10, the other receiver being coupled to a strobe 14. The strobe 14 may be used to fire a pulse of light that "freezes" the rotation of the machine, such that it appears stationary.

Fig 7 and Fig 8 illustrate embodiments which may be used to provide a frequency response/transfer function. The analyser may output a signal that is used to excite an object such as a machine or structure under examination. In the Fig 7 embodiment, a real time output is fed to an actuator to stimulate a structure to be analysed. The vibrational analyser may sweep the output signal up/down in frequency to excite the actuator 15 and thus the structure being analysed at a plurality of desired frequencies and measure the response.

The vibrational analyser may also output some form of band limited noise that can be used to measure the systems response.

Fig 8 illustrates a similar arrangement in which both an actuator 15 and headphones 10 are linked to an analyser.

Where a headphone output is provided, this may also playback pre-recorded signals that can be used to prompt the user. This may be useful:
1) When the user cannot see the unit's screen properly.
2) He does not wish to look at the screen (he wishes to concentrate on other factors, for example personal safety).
3) For entertainment, for example music.
4) For route instructions (what machines, where on the machines, where the machines are)

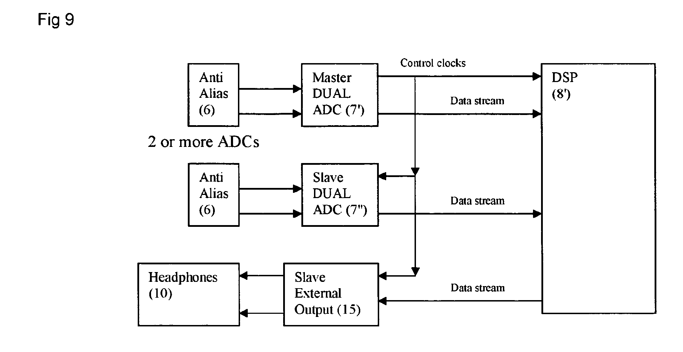

Fig 9 illustrates a configuration which may be used to implement certain embodiments of the invention with an in-phase multi-channel system. The introduction of the Pro Audio standard has brought to the market a number of fast (∼200 kHz), low noise (24 Bit) and low cost ADCs from several companies. These devices are from a specification point of view suitable for noise and vibration measurement. The invention attains a known and synchronized phase relationship between ADC(s) and real-time output(s), from input to output to enable transfer of information/data with a known phase relationship. The signals between the digital units must also be minimised to ensure that coupling from the analogue to the digital circuitry is minimised.

In the embodiments illustrated in Figs 4 to 8, it is to be understood that the input signal to the digital signal processor 8 is suitably derived from a series arrangement of a sensor 1, Input Conditioning 2, anti-alias filter 6, and analogue-to-digital converter 7, as shown in Fig 3.

Fig 9 illustrates an implementation of the invention by means of control clocks such as frame/clock, left right clock and bit clock. As is illustrated, the embodiment according to Fig 9 comprises two ADCs 7', 7", and an external output 12. According to this implementation, one of the ADCs 7' is a master and the other ADC 7", the real-time output 15 (normally an integral part of the DSP) and the DSP 8' are control clock slaves. This means that all the digital units and the converters are synchronized by the same control clock originating from one source. This enables full control of the phase from input to output. Once again, it is to be understood that the input to the two anti-alias filters 6 is derived from two separate sensors (not shown) after signal conditioning (not shown).

Alternatively to what is shown in Fig 9, the DSP can be the control clock master and all the other units are slaves.

Any feature of the shown embodiments of the invention may be combined with any other feature or features as long as there is not a conflict between these features.

### REFERENCE NUMERALS

1: A sensor, for example an accelerometer, that measures a parameter that relates to the condition of the machine that is being examined.
2: Input conditioning; providing sensor power and gain if required
3: Demodulation, typically some form of band limiting filters followed by demodulation (examples are enveloping, GSe). This may also include demodulating signals that are ultrasonic (SEE or Acoustic emissions)
4: Filtering to remove spurious out of band signals or time domain integration
5: Multiplexor to select straight, filtered or demodulated paths
6: Anti-alias for removal of out of band signals
7: An analogue to digital converter (ADC) to convert analogue signal into digital representation
7': An ADC, control clock master
7": An ADC, control clock slave
8: A digital signal processor (DSP) to perform digital processing, for example FFT
8': A DSP, control clock slave
9: Amplifier to boost output from analogue signal path to levels required to drive a headphone
10: Headphones
11: A DAC, driven from the DSP with a digital stream
12: A wireless transmitter
13: A wireless receiver (which may be part of a peripheral device)
14: Strobe
15: External output
16: Actuator

## Claims

1. An off-line signal analyser comprising an analogue to digital converter (7, 7', 7"), which converts analogue input signals to digital signals, where the analogue input signals comprise a phase, the analyser further comprising a digital signal processor (8, 8') configured to perform digital processing on the digital signals from the analogue to digital converter, the signal analyser further comprises an external output (15) derived from the digital signal processor and configured to provide a real-time output signal, **characterised in that** the real time output signal is synchronized with the analogue to digital converter (7, 7', 7") at least with respect to the signal phase.

2. An off-line signal analyser in accordance with claim 1, in which the external output (15) is a functional part of the digital signal processor (8, 8') and the analogue to digital converter and the digital signal processor have a common control clock.

3. An off-line signal analyser in accordance with claim 2, in which one of the analogue to digital converter, or the digital signal processor is a control clock master and the other is a control clock slave.

4. An off-line signal analyser in accordance with any of the preceding claims, in which the real time output is configured to provide a signal to a peripheral device selected from the list consisting of:
a listening device;
headphones (10);
an image recorder;
a camera;
a timing device;
a strobe light (14);
an actuator (16);
a frequency generator; and
a signal source for exciting a structure to be examined.

5. An off-line signal analyser in accordance with claim 1 or 2, in which the external output is configured to provide a real time output to at least two different peripheral devices.

6. An off-line signal analyser in accordance with claim 5, in which the external output (15) is configured to simultaneously provide a real time output to a least two independent peripheral devices.

7. An off-line signal analyser in accordance with any preceding claim, in which the real time output comprises at least one signal selected from the list consisting of:
a signal configured to drive a listening device;
a signal configured to drive headphones;
a signal configured to control an image recorder;
a signal configured to control a camera;
a signal configured to control a timing device;
a signal configured to control a strobe light;
a signal configured to control an actuator;
a signal configured to control a frequency generator; and
a signal configured to control a signal source for exciting a structure to be examined.

8. An off-line signal analyser in accordance with any preceding claim, comprising a selector configured to permit selection of the real time output from between at least two of:
a signal configured to drive a listening device;
a signal configured to control an image recorder;
a signal configured to control a timing device;
a signal configured to control a strobe light;
a signal configured to control a signal source for exciting a structure to be examined.

9. An off-line signal analyser in accordance with claim 4, in which the external output (15) is configured to provide a digital output signal, derived from the digital signal processor, to the peripheral device.

10. An off-line signal analyser in accordance with claim 6, in which the external output (15) comprises an interface selected from a USB interface and a RS232 interface.

11. An off-line signal analyser in accordance with claim 4, in which the external output comprises a wireless transmitter (12) configured to transmit the real time output to the peripheral device.

12. An off-line signal analyser in accordance with claim 11, in which the wireless transmitter comprises a Bluetooth interface.

13. An off-line signal analyser in accordance with any preceding claim, in which the real time output comprises at least one of:
a signal used as the input signal to the digital signal processor;
a signal that has been digitally filtered by the digital signal processor;
a signal that has been digitally filtered and demodulated by the digital signal processor;
a signal that has been digitally attenuated by the digital signal processor;
a signal that has been digitally amplified by the digital signal processor;
a signal that has been shifted in frequency by the digital signal processor; and
a stereo signal having left and right channels providing different data.

14. An off-line signal analyser in accordance with any preceding claim, comprising a selector configured to permit selection of the real time output from between at least two of:
a signal used as the input signal to the digital signal processor;
a signal that has been digitally filtered by the digital signal processor;
a signal that has been digitally filtered and demodulated by the digital signal processor;
a signal that has been digitally attenuated by the digital signal processor;
a signal that has been digitally amplified by the digital signal processor;
a signal that has been shifted in frequency by the digital signal processor;
a stereo signal having left and right channels providing different data;
and
a pre-recorded signal.

15. An off-line signal analyser in accordance with any preceding claim, in which the external output is a multifunctional output.

16. An off-line signal analyser in accordance with claim 15, in which the external output is configured to output at least one of a plurality of signals derived from the digital signal processor and selectable by a user.

17. An off-line signal analyser in accordance with any preceding claim, in which the analyser comprises multi-channel signal processing.

18. An off-line signal analyser in accordance with any preceding claim, in which the external output (15) is configured to provide a real time output signal derived from the digital signal processor to headphones (10).

## Patentansprüche

1. Offline-Signalanalysator, der einen Analog/Digital-Umsetzer (7, 7', 7") umfasst, der analoge Eingangssignale in digitale Signale umsetzt, wobei die analogen Eingangssignale eine Phase besitzen, wobei der Analysator ferner einen digitalen Signalprozessor (8, 8') umfasst, der konfiguriert ist, eine digitale Verarbeitung an den digitalen Signalen von dem Analog/Digital-Umsetzer durchzuführen, wobei der Signalanalysator ferner einen externen Ausgang (15) umfasst, der aus dem digitalen Signalprozessor abgeleitet ist und konfiguriert ist, ein Echtzeit-Ausgangssignal bereitzustellen, **dadurch gekennzeichnet, dass** das Echtzeit-Ausgangssignal mit dem Analog/Digital-Umsetzer (7, 7', 7") wenigstens in Bezug auf die Signalphase synchronisiert ist.

2. Offline-Signalanalysator gemäß Anspruch 1, wobei der externe Ausgang (15) ein funktionaler Abschnitt des digitalen Signalprozessors (8, 8') ist und der Analog/Digital-Umsetzer und der digitale Signalprozessor einen gemeinsamen Steuertakt aufweisen.

3. Offline-Signalanalysator nach Anspruch 2, wobei der Analog/Digital-Umsetzer oder der digitale Signalprozessor ein Steuertakt-Master ist und der jeweils andere ein Steuertakt-Slave ist.

4. Offline-Signalanalysator nach einem der vorhergehenden Ansprüche, wobei der externe Ausgang konfiguriert ist, ein Signal für eine Peripherievorrichtung bereitzustellen, die ausgewählt ist aus der Liste, die aus Folgendem besteht:
einer Abhörvorrichtung;
Kopfhörer (10);
einer Bildaufzeichnungsvorrichtung;
einer Kamera;
einer Zeitmessvorrichtung;
einem Stroboskop (14);
einem Aktuator (16);
einem Frequenzgenerator; und
einer Signalquelle zum Anregen einer Struktur, die untersucht werden soll.

5. Offline-Signalanalysator nach Anspruch 1 oder 2, wobei der externe Ausgang konfiguriert ist, eine Echtzeit-Ausgabe zu wenigstens zwei unterschiedlichen Peripherievorrichtungen bereitzustellen.

6. Offline-Signalanalysator nach Anspruch 5, wobei der externe Ausgang (15) konfiguriert ist, gleichzeitig eine Echtzeit-Ausgabe zu wenigstens zwei unabhängigen Peripherievorrichtungen bereitzustellen.

7. Offline-Signalanalysator nach einem der vorhergehenden Ansprüche, wobei die Echtzeit-Ausgabe wenigstens ein Signal umfasst, das aus der Liste ausgewählt ist, die aus Folgendem besteht:
einem Signal, das konfiguriert ist, eine Abhörvorrichtung anzusteuern;
einem Signal, das konfiguriert ist, Kopfhörer anzusteuern;
einem Signal, das konfiguriert ist, eine Bildaufzeichnungsvorrichtung zu steuern;
einem Signal, das konfiguriert ist, eine Kamera zu steuern;
einem Signal, das konfiguriert ist, eine Zeitmessvorrichtung zu steuern;
einem Signal, das konfiguriert ist, ein Stroboskop zu steuern;
einem Signal, das konfiguriert ist, einen Aktuator zu steuern;
einem Signal, das konfiguriert ist, einen Frequenzgenerator zu steuern; und
einem Signal, das konfiguriert ist, eine Signalquelle zum Anregen einer Struktur, die untersucht werden soll, zu steuern.

8. Offline-Signalanalysator nach einem der vorhergehenden Ansprüche, der eine Auswahlvorrichtung umfasst, die konfiguriert ist, eine Auswahl der Echtzeit-Ausgabe aus wenigstens zwei Signalen aus Folgendem zu ermöglichen:
einem Signal, das konfiguriert ist, eine Abhörvorrichtung anzusteuern;
einem Signal, das konfiguriert ist, eine Bildaufzeichnungsvorrichtung zu steuern;
einem Signal, das konfiguriert ist, eine Zeitmessvorrichtung zu steuern;
einem Signal, das konfiguriert ist, ein Stroboskop zu steuern;
einem Signal, das konfiguriert ist, eine Signalquelle zum Anregen einer Struktur, die untersucht werden soll, zu steuern.

9. Offline-Signalanalysator nach Anspruch 4, wobei der externe Ausgang (15) konfiguriert ist, ein digitales Ausgangssignal, das aus dem digitalen Signalprozessor abgeleitet ist, für die Peripherievorrichtungen bereitzustellen.

10. Offline-Signalanalysator nach Anspruch 6, wobei der externe Ausgang (15) eine Schnittstelle umfasst, die aus einer USB-Schnittstelle und einer RS232-Schnittstelle ausgewählt ist.

11. Offline-Signalanalysator nach Anspruch 4, wobei der externe Ausgang einen drahtlosen Sender (12) umfasst, der konfiguriert ist, die Echtzeit-Ausgabe zu der Peripherievorrichtung zu senden.

12. Offline-Signalanalysator nach Anspruch 11, wobei der drahtlose Sender eine Bluetooth-Schnittstelle umfasst.

13. Offline-Signalanalysator nach einem der vorhergehenden Ansprüche, wobei die Echtzeitausgabe wenigstens ein Signal aus Folgendem umfasst:
ein Signal, das als das Eingangssignal für den digitalen Signalprozessor verwendet wird;
ein Signal, das durch den digitalen Signalprozessor digital gefiltert wurde;
ein Signal, das durch den digitalen Signalprozessor digital gefiltert und demoduliert wurde;
ein Signal, das durch den digitalen Signalprozessor digital gedämpft wurde;
ein Signal, das durch den digitalen Signalprozessor digital verstärkt wurde;
ein Signal, dessen Frequenz durch den digitalen Signalprozessor verschoben wurde; und
ein Stereosignal, das linke und rechte Kanäle aufweist, die unterschiedliche Daten bereitstellen.

14. Offline-Signalanalysator nach einem der vorhergehenden Ansprüche, der eine Auswahlvorrichtung umfasst, die konfiguriert ist, eine Auswahl der Echtzeit-Ausgabe aus wenigstens zwei Signalen aus Folgendem zu ermöglichen:
einem Signal, das als Eingangssignal für den digitalen Signalprozessor verwendet wird;
einem Signal, das durch den digitalen Signalprozessor digital gefiltert wurde;
einem Signal, das durch den digitalen Signalprozessor digital gefiltert und demoduliert wurde;
einem Signal, das durch den digitalen Signalprozessor digital gedämpft wurde;
einem Signal, das durch den digitalen Signalprozessor digital verstärkt wurde;
einem Signal, dessen Frequenz durch den digitalen Signalprozessor verschoben wurde;
einem Stereosignal, das linke und rechte Kanäle aufweist, die unterschiedliche Daten bereitstellen; und
einem aufgezeichneten Signal.

15. Offline-Signalanalysator nach einem der vorhergehenden Ansprüche, wobei der externe Ausgang ein multifunktionaler Ausgang ist.

16. Offline-Signalanalysator nach Anspruch 15, wobei der externe Ausgang konfiguriert ist, wenigstens eines von mehreren Signalen, die aus dem digitalen Signalprozessor abgeleitet werden und von einem Anwender ausgewählt werden können, auszugeben.

17. Offline-Signalanalysator nach einem der vorhergehenden Ansprüche, wobei der Analysator Mehrkanalsignalverarbeitung umfasst.

18. Offline-Signalanalysator nach einem der vorhergehenden Ansprüche, wobei der externe Ausgang (15) konfiguriert ist, ein Echtzeit-Ausgangssignal, das aus dem digitalen Signalprozessor abgeleitet ist, für Kopfhörer (10) bereitzustellen.

## Revendications

1. Analyseur de signaux hors ligne, comprenant un convertisseur analogique-numérique (7, 7', 7"), qui convertit des signaux analogiques d'entrée en signaux numériques, les signaux analogiques d'entrée comprenant une phase, l'analyseur comprenant en outre un processeur numérique de signaux (8, 8') conçu pour soumettre à un traitement numérique les signaux numériques provenant du convertisseur analogique-numérique, l'analyseur de signaux comprenant en outre une sortie externe (15) obtenue du processeur numérique de signaux et conçue pour fournir un signal de sortie en temps réel, **caractérisé en ce que** le signal de sortie en temps réel est synchronisé avec le convertisseur analogique-numérique (7, 7', 7'') au moins par rapport à la phase du signal.

2. Analyseur de signaux hors ligne selon la revendication 1, dans lequel la sortie externe (15) est une partie fonctionnelle du processeur numérique de signaux (8, 8') et le convertisseur analogique-numérique et le processeur numérique de signaux possèdent une horloge de commande commune.

3. Analyseur de signaux hors ligne selon la revendication 2, dans lequel le convertisseur analogique-numérique ou bien le processeur numérique de signaux est un maître d'horloge de commande et l'autre est un esclave d'horloge de commande.

4. Analyseur de signaux hors ligne selon l'une quelconque des revendications précédentes, dans lequel la sortie externe est conçue pour fournir un signal à un dispositif périphérique choisi dans la liste constituée par :
un dispositif d'écoute ;
un casque (10) ;
un enregistreur d'images ;
un appareil photographique ;
un dispositif de temporisation ;
une lumière stroboscopique (14) ;
un actionneur (16) ;
un générateur de fréquence ; et
une source de signaux pour exciter une structure à examiner.

5. Analyseur de signaux hors ligne selon la revendication 1 ou 2, dans lequel la sortie externe est conçue pour fournir une sortie en temps réel à au moins deux dispositifs périphériques différents.

6. Analyseur de signaux hors ligne selon la revendication 5, dans lequel la sortie externe (15) est conçue pour fournir une sortie en temps réel simultanément à au moins deux dispositifs périphériques indépendants.

7. Analyseur de signaux hors ligne selon l'une quelconque des revendications précédentes, dans lequel la sortie en temps réel comprend au moins un signal choisi dans la liste constituée par :
un signal conçu pour piloter un dispositif d'écoute ;
un signal conçu pour piloter un casque ;
un signal conçu pour commander un enregistreur d'images ;
un signal conçu pour commander un appareil photographique ;
un signal conçu pour commander un dispositif de temporisation ;
un signal conçu pour commander une lumière stroboscopique ;
un signal conçu pour commander un actionneur ;
un signal conçu pour commander un générateur de fréquence ; et
un signal conçu pour commander une source de signaux pour exciter une structure à examiner.

8. Analyseur de signaux hors ligne selon l'une quelconque des revendications précédentes, comprenant un sélecteur conçu pour permettre une sélection de la sortie en temps réel parmi au moins deux des signaux suivantes :
un signal conçu pour piloter un dispositif d'écoute ;
un signal conçu pour commander un enregistreur d'images ;
un signal conçu pour commander un dispositif de temporisation ;
un signal conçu pour commander une lumière stroboscopique ;
un signal conçu pour commander une source de signaux pour exciter une structure à examiner.

9. Analyseur de signaux hors ligne selon la revendication 4, dans lequel la sortie externe (15) est conçue pour fournir un signal numérique de sortie, obtenu du processeur numérique de signaux, au dispositif périphérique.

10. Analyseur de signaux hors ligne selon la revendication 6, dans lequel la sortie externe (15) comprend une interface choisie parmi une interface USB et une interface RS232.

11. Analyseur de signaux hors ligne selon la revendication 4, dans lequel la sortie externe comprend un émetteur sans fil (12) conçu pour émettre la sortie en temps réel à destination du dispositif périphérique.

12. Analyseur de signaux hors ligne selon la revendication 11, dans lequel l'émetteur sans fil comprend une interface Bluetooth.

13. Analyseur de signaux hors ligne selon l'une quelconque des revendications précédentes, dans lequel la sortie en temps réel comprend au moins un des signaux suivantes :
un signal utilisé comme le signal d'entrée appliqué au processeur numérique de signaux ;
un signal qui a été filtré numériquement par le processeur numérique de signaux ;
un signal qui a été filtré et démodulé numériquement par le processeur numérique de signaux ;
un signal qui a été atténué numériquement par le processeur numérique de signaux ;
un signal qui a été amplifié numériquement par le processeur numérique de signaux ;
un signal qui a été déplacé en fréquence par le processeur numérique de signaux ; et
un signal stéréo comprenant des voies de gauche et de droite fournissant des données différentes.

14. Analyseur de signaux hors ligne selon l'une quelconque des revendications précédentes, comprenant un sélecteur conçu pour permettre une sélection de la sortie en temps réel parmi au moins deux des signaux suivantes :
un signal utilisé comme le signal d'entrée appliqué au processeur numérique de signaux ;
un signal qui a été filtré numériquement par le processeur numérique de signaux ;
un signal qui a été filtré et démodulé numériquement par le processeur numérique de signaux ;
un signal qui a été atténué numériquement par le processeur numérique de signaux ;
un signal qui a été amplifié numériquement par le processeur numérique de signaux ;
un signal qui a été déplacé en fréquence par le processeur numérique de signaux ;
un signal stéréo comprenant des voies de gauche et de droite fournissant des données différentes ; et
un signal préenregistré.

15. Analyseur de signaux hors ligne selon l'une quelconque des revendications précédentes, dans lequel la sortie externe est une sortie multifonctionnelle.

16. Analyseur de signaux hors ligne selon la revendication 15, dans lequel la sortie externe est conçue pour fournir au moins un parmi une pluralité de signaux obtenus du processeur numérique de signaux et sélectionnables par un utilisateur.

17. Analyseur de signaux hors ligne selon l'une quelconque des revendications précédentes, comprenant un traitement de signaux multivoie.

18. Analyseur de signaux hors ligne selon l'une quelconque des revendications précédentes, dans lequel la sortie externe (15) est conçue pour fournir un signal de sortie en temps réel, obtenu du processeur numérique de signaux, à un casque (10).
